# FASCICULE DE BREVET EUROPEEN

(11) **EP 3 120 119 B1**
(45) Date de publication et mention de la délivrance du brevet: **16.06.2021**
(21) Numéro de dépôt: 15709974.8
(22) Date de dépôt: 17.03.2015
(51) Int. Cl.: G01F 1/69, G01K 1/08, G01K 7/16, G01K 13/02, H01C 1/028, H01B 3/08

(54) **PROCEDE DE FABRICATION D'UN ELEMENT SENSIBLE A UN PARAMETRE PHYSIQUE D'UN ECOULEMENT DE FLUIDE ET ELEMENT SENSIBLE CORRESPONDANT**
VERFAHREN ZUR HERSTELLUNG EINES GEGENÜBER EINEM PHYSIKALISCHEN PARAMETER EINER STRÖMUNG ODER FLÜSSIGKEIT EMPFINDLICHEN ELEMENTS UND ENTSPRECHENDES EMPFINDLICHES ELEMENT
METHOD OF MANUFACTURING AN ELEMENT SENSITIVE TO A PHYSICAL PARAMETER OF A FLOW OF FLUID AND CORRESPONDING SENSITIVE ELEMENT

(30) Priorité: 17.03.2014 FR 1452188
(43) Date de publication de la demande: 25.01.2017
(73) Titulaire: Auxitrol, 18000 Bourges (FR)
(72) Inventeur: GRAS, Christian, F-18230 Saint Doulchard (FR); DONAT, Catherine, F-18500 Mehun sur Yevre (FR)
(74) Mandataire: Regimbeau
(86) Numéro de dépôt international: PCT/EP2015/055583
(87) Numéro de publication internationale: WO 2015/140182

(56) Documents cités:
- EP-A1- 0 447 295
- EP-A2- 0 332 110
- FR-A- 890 176
- FR-A1- 2 822 542
- JP-A- 2005 045 175
- JP-B1- 5 216 947

## Description

### DOMAINE TECHNIQUE GENERAL

L'invention concerne un procédé de fabrication d'un élément sensible d'un dispositif de mesure d'au moins un paramètre physique d'un écoulement de fluide tel que la température, les vibrations, la vitesse, la pression. Un tel dispositif de mesure trouve notamment application dans l'aéronautique.

### ETAT DE LA TECHNIQUE

Un élément sensible à au moins un paramètre physique d'un écoulement de fluide doit être capable de fonctionner, notamment en aéronautique, dans un milieu agressif tout en résistant le mieux possible aux variations de température, aux variations de courants d'alimentation, aux chocs, aux vibrations, aux pressions et aux forces d'écoulement du fluide.

On connait des élément sensibles comprenant un mandrin allongé dans lequel passent longitudinalement des fils de raccordement conducteurs qui se raccordent à un bobinage mono ou bi-filaire enroulé sur la surface extérieure du mandrin et un revêtement isolant en verre entourant le mandrin allongé et son bobinage mono ou bi-filaire. Le document EP 0 332 110 A2 décrit un élément sensible et son procédé de fabrication.Pour fabriquer de tels éléments sensibles, on applique au moyen d'un pinceau un mélange de verre et d'eau sur le mandrin bobiné et dans des canaux longitudinaux au travers desquels passent les fils de raccordement, afin de sceller les fils de raccordement conducteurs dans les canaux. Le mandrin est ensuite séché et cuit au four. Une telle opération est renouvelée plusieurs fois afin de de garantir un revêtement et un scellement de qualité.

Au cours de la fabrication, pour enrober l'extérieur de verre, le mandrin bobiné est immergé dans un mélange de verre et d'eau à température ambiante puis séché et cuit au four. A nouveau, une telle opération est renouvelée plusieurs fois pour obtenir une épaisseur de verre désirée.

Dans les cas où cette immersion n'est pas réalisable, l'enrobage extérieur de verre peut être réalisé par dépose au pinceau du mélange de verre et d'eau à température ambiante puis également séché et cuit au four. A nouveau, une telle opération est renouvelée plusieurs fois pour obtenir une épaisseur de verre désirée.

Au cours de la fabrication, pour sceller les fils de raccordement dans les trous du mandrin, une barbotine céramique (mélange d'eau à température ambiante et d'oxydes vitreux et/ou cristallins) est introduite dans les trous, par immersion dans la barbotine et passage sous vide et/ou au pinceau, puis à nouveau séché et cuit au four. Selon le procédé, une telle opération peut être renouvelée plusieurs fois pour obtenir la qualité désirée du scellement.

Un problème est qu'un tel procédé est complexe car présentant de nombreuses étapes devant être reproduites plusieurs fois. Le scellement des pattes dans les canaux est perfectible car il est difficile, avec une barbotine, de remplir les canaux une fois cette barbotine cuite, ce qui fragilise l'élément sensible.

### PRESENTATION DE L'INVENTION

L'invention résout les problèmes ci-dessus mentionnés, et propose, à cet effet un procédé de fabrication d'un élément sensible selon la revendication 1.

L'invention est avantageusement complétée par les caractéristiques suivantes, prises seules ou en une quelconque de leur combinaison techniquement possible.

Le bobinage bifilaire est enroulé sur la surface extérieure du mandrin, l'immersion permettant d'enrober l'extérieur du mandrin ainsi bobiné.

Le bobinage est enroulé en « tire-bouchon » à l'intérieur des canaux longitudinaux, l'immersion permettant de maintenir les fils de raccordement au bobinage et de contrôler l'espace entre les spires du bobinage.

L'élément sensible pré-assemblé comprend un tube entourant le mandrin, ledit tube étant de préférence en verre ou en céramique, ledit tube permettant de maitriser l'épaisseur minimum de l'enrobage au cours de l'immersion.

Le cycle unique d'immersion comprend une étape de préchauffage et de nettoyage de l'élément sensible pré-assemblé consistant à positionner ledit élément sensible pré-assemblé à proximité du verre en fusion de façon à ce qu'il atteigne une température proche dudit verre en fusion.

Le cycle unique d'immersion comprend une étape d'extraction lente du mandrin du verre en fusion suivie d'une étape d'extraction rapide du mandrin de la zone chaude du four.

Le procédé comprend à l'issue de l'étape consistant en un cycle unique d'immersion, une étape de stabilisation du comportement électrique de l'élément sensible assemblé par détensionnement au cours d'un recuit du verre à température modérée et contrôlée afin d'obtenir l'élément sensible définitif.

Les fils de raccordement et le bobinage sont en alliage de platine et le mandrin est en zircone partiellement ou totalement stabilisée, par exemple par ajout d'oxyde d'yttrium ou d'oxyde de magnésium.

Le verre en fusion présente une température comprise entre 400°C et 1200°C, typiquement 950°C.

L'invention concerne également un élément sensible obtenu par un procédé selon l'invention ainsi que qu'un dispositif de mesure, comprenant un tel élément sensible.

L'invention consiste donc à utiliser un verre en fusion ayant des caractéristiques parfaitement adaptées au mandrin, de préférence en céramique, au matériau des fils de raccordement et du bobinage (viscosité à chaud, dilatation contrôlée, élasticité, aptitude à la trempe, agressivité chimique, ...) et immerger le mandrin dans le verre en fusion de façon à réaliser au cours de la même opération
- le scellement des fils de raccordement par la remontée du verre dans les canaux longitudinaux (passage suffisant et/ou effet de capillarité du verre liquide) ;
- le bouchage éventuel des canaux non utilisés (dans le cas où les mandrins sont standardisés) ;
- l'enrobage extérieur par tension superficielle du verre liquide sur le mandrin.

Dans le cas où le bobinage est en « tire-bouchon », à l'intérieur du mandrin, ce dernier est protégé à l'intérieur des trous du mandrin (deux ou quatre trous) mais maintenu avec les fils de raccordement par immersion dans le verre en fusion. Ceci permet de remplir progressivement les trous sans solliciter mécaniquement les spires du bobinage en tire-bouchon, jusqu'à sceller efficacement les fils de raccordement.

En effet, lorsque le mandrin est en zircone et les fils de raccordement en platine, le coefficient de dilatation thermique de la zircone étant suffisamment proche de celui du platine, le maintien des spires peut être réalisé par un matériau « rigide » comme du verre plutôt de « souple » comme une poudre compactée où les grains ne sont pas liés chimiquement entre eux, améliorant ainsi le comportement sous forte sollicitation vibratoire et permettant de garantir facilement un diélectrique très élevé entre le circuit résistif et la surface extérieure du mandrin. D'autre part, en utilisant un fil platine initialement recouvert d'une couche d'émail céramique de quelque micromètres seulement (adhéré directement sur le platine ou via une métallisation très fine du platine par un métal plus facilement oxydable comme du nickel par exemple), la calibration de la résistance électrique de l'élément pourrait être réalisée « en partie droite », avant même d'insérer les fils de raccordement et les spires dans les trous du mandrin céramique. De plus, dans une telle configuration, le mandrin céramique n'est plus nécessairement ni de forme élancée, ni de section constante. Cette alternative permettrait donc également d'optimiser la forme de la céramique par rapport à la zone à mesurer, à son assemblage mécanique sur le corps du capteur ou toute autre contrainte géométrique. Cette pièce en céramique pourrait en outre être obtenue par extrusion comme nos mandrins actuels mais également par procédé CIM (en anglais, *« Ceramic Injection Molding* ») ou usinage dans un brut dense.

Dans le cas où l'élément sensible comprend un tube en verre ou en céramique, ce dernier peut supporter des contraintes diélectriques supérieures tout en réduisant les coûts de fabrication. Ce design a pour principaux avantages de
- conserver les mandrins céramiques actuels et simplifier l'usinage du mandrin céramique central (détalonner jusqu'à faire apparaître les canaux demande moins de dextérité et de temps que réaliser une extrémité hémisphérique) ;
- éviter les manipulations « à l'aveugle » des raccordements fils bobinés / fils de raccordement ;
- garantir un diélectrique élevé entre le bobinage et l'extérieur :
   - radialement : épaisseur minimum d'isolant tube et verre
   - axialement : la sur-longueur du mandrin par rapport aux fils.

En outre, grâce à l'épaisseur du tube, le verre en fusion n'a plus à réaliser une épaisseur d'enrobage extérieur importante.

De manière avantageuse, l'utilisation d'un verre très fluide permet de réduire l'épaisseur de cet enrobage extérieur et par là même les irrégularités (effet goutte). Les effets de capillarité permettent de maintenir en place ce verre très fluide dans les volumes intérieur remplis.

L'invention propose également un élément sensible obtenu par un procédé selon l'invention.

Et l'invention propose enfin un dispositif de mesure comprenant un élément sensible selon l'invention.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre une vue générale d'un élément sensible selon l'invention ;
- la figure 2 illustre une vue en perspective d'un élément sensible selon l'invention ;
- la figure 3 illustre une vue en coupe d'un élément sensible selon l'invention ;
- la figure 4 illustre une vue partielle d'un canal longitudinal comprenant un fil conducteur d'un élément sensible selon l'invention ;
- la figure 5 illustre une en coupe d'un élément sensible selon l'invention ;
- la figure 6 illustre une vue en coupe d'un élément sensible selon l'invention ;
- la figure 7 illustre des étapes d'un procédé de fabrication d'un élément sensible selon l'invention ;
- la figure 8 illustre des sous-étapes d'un procédé de fabrication d'un élément sensible selon l'invention ;
- les figures 9a à 9e illustrent la mise en oeuvre des sous-étapes décrites en relation avec la figure 8.

Sur l'ensemble des figures les éléments similaires portent des références identiques.

### DESCRIPTION DETAILLEE DE L'INVENTION

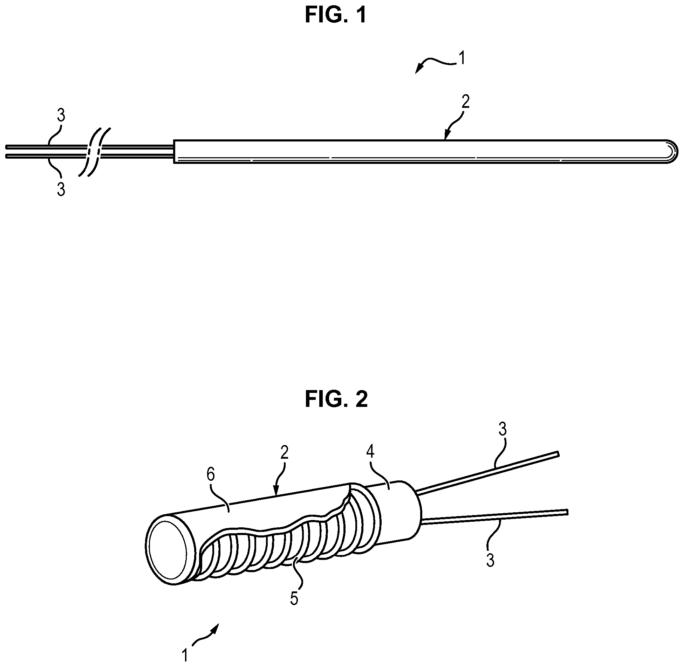

En relation avec la **figure 1****,** un élément sensible 1 à au moins un paramètre physique d'un écoulement de fluide comprend un corps 2 allongé duquel sortent des fils 3 de raccordement conducteurs.

En relation avec la **figure 2****,** le corps 2 allongé comprend notamment un mandrin 4 allongé dans lequel passent longitudinalement les fils 3 de raccordement conducteurs qui se raccordent à un bobinage 5 au moins bifilaire dépendant du nombre de fils 3 de raccordement constitué de fils conducteurs bobinés autour du mandrin 4.

Comme on peut le voir sur la figure 2, le bobinage 5 est enroulé sur la surface extérieure du mandrin 4.

Un revêtement isolant en verre ou vitro-céramique 6 entoure le mandrin allongé 4 et son bobinage 5, pour assurer la tenue des fils et l'étanchéité de l'élément par rapport à l'environnement extérieur. Le revêtement isolant en verre ou vitro-céramique est obtenu par immersion du mandrin 4 dans un verre en fusion au cours d'un cycle d'immersion spécifique (comme on le détaillera par la suite).

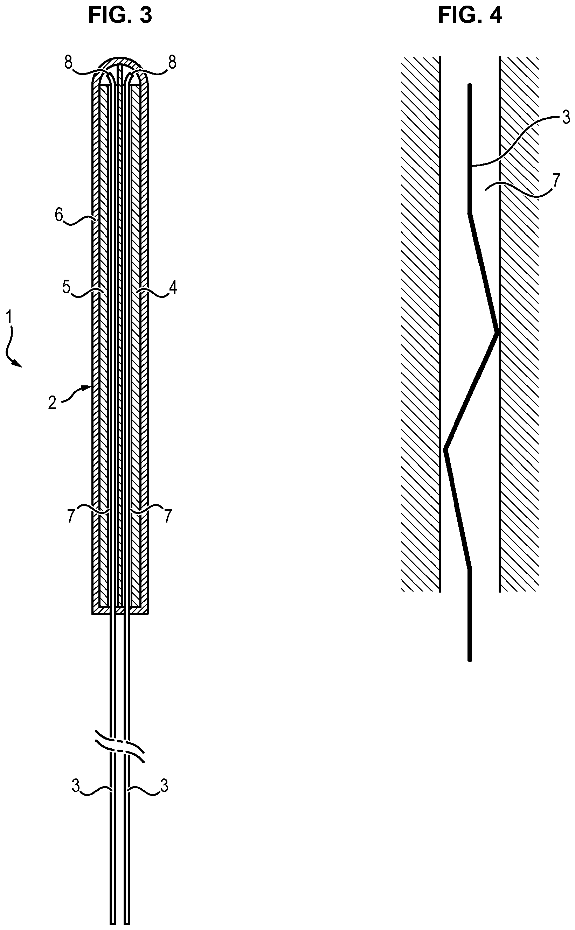

En relation avec la **figure 3****,** le mandrin allongé 4 comprend aux moins deux canaux longitudinaux 7, permettant le passage des fils 3 de raccordement conducteurs.

De manière avantageuse, les fils de raccordement 3 sont accessibles de l'autre extrémité du mandrin allongé 4, et sont alors raccordés, au moyen d'une soudure ou d'une brasure 8, au bobinage 5 qui est enroulé sur la surface extérieure du mandrin 4. Les fils de raccordement 3 sont avantageusement préformés avec une forme en « Z » afin d'améliorer leur maintien à l'intérieur des canaux longitudinaux par friction. On a illustré sur la **figure 4****,** une vue partielle d'un canal longitudinal 7 avec un fil de raccordement 3 préformé avec une forme en « Z ».

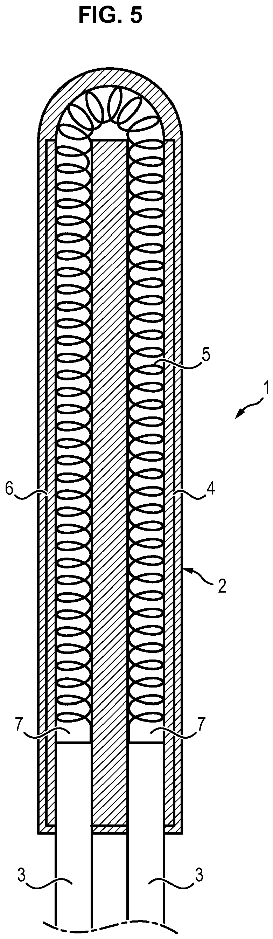

De manière alternative, en relation avec la **figure 5****,** le bobinage bifilaire est enroulé en « tire-bouchon » à l'intérieur des canaux 7 longitudinaux.

Les fils de raccordement 3 ainsi que le bobinage 5 sont de préférence en métal noble comme du platine ou du palladium de façon à ne pas s'oxyder à haute température.

Le mandrin 4 est classiquement obtenu par extrusion du fait de sa géométrie allongée.

A titre indicatif, les fils de raccordement 3 présentent habituellement un diamètre de l'ordre de un à cinq dixièmes de millimètre, tandis que le bobinage est constitué de fils de platine d'un diamètre de l'ordre de dix à cinquante micromètres.

En outre, le mandrin 4 est typiquement en céramique et notamment en zircone yttriée ou magnésiée (c'est-à-dire une zircone stabilisée par quelques pour cent d'oxyde d'yttrium ou d'oxyde de magnésium). Comme on l'aura compris, il s'agit de l'ossature principale de l'élément sensible.

Le matériau du mandrin 4 confère à ce dernier les propriétés suivantes.
- Il est résistant mécaniquement pour supporter les sollicitations mécaniques (flexion, torsion, traction/compression, vibrations, chocs, ...).
- Il est suffisamment isolant électriquement pour ne pas perturber le bobinage conducteur (résistance d'isolement et rigidité diélectrique).
- Il supporte à la fois les températures de fonctionnement (-260°C / +500°C) mais également les températures impliquées dans le cadre du cycle d'immersion (400°C à 1200°C).
- Il supporte les chocs thermiques de fonctionnement (jusqu'à 150°C/s) mais également les chocs thermiques rencontrés au cours du cycle d'immersion bien plus sévères (environ 2000°C/s sur une étendue de plusieurs centaines de degrés Celsius).
- Les contraintes qu'il induit au bobinage de platine par dilatation thermique différentielle sont négligeables dans les températures usuelles de fonctionnement, la dilatation naturelle du platine conditionne directement sa réponse électrique (R_{T}=ρ_{T}L_{T}/S_{T}) et permet à l'élément sensible de suivre avec précision la loi de *CALLENDAR* - *VAN DUSSEN.*
- Il est suffisamment isolant thermiquement pour ne pas perturber la mesure thermique faite par le bobinage.
- Il est suffisamment isolant thermiquement pour ne pas transmettre la température de la zone de fixation à la zone bobinée (conduction thermique axiale).
- Il a une forme optimale pour permettre au bobinage d'être au plus près de la zone à mesurer (élément encapsulé dans un corps miniaturisé) ou au flux de fluide d'être le plus en contact possible avec le bobinage (écoulement aérothermique autour de l'élément) de façon à minimiser son temps de réponse. De plus sa forme de révolution lui permet de ne pas être sensible à l'orientation angulaire du flux de fluide.

En outre, l'utilisation de zircone permet de meilleures performances thermomécaniques par rapport aux céramiques traditionnellement utilisées pour les RTD (*Resistance Temperature Detector* ou *Device)* : les forstérites ou les alumines. En effet, la zircone présente des propriétés thermiques particulièrement intéressantes : très faibles conductivité thermique et chaleur spécifique ce qui entraine, malgré une masse volumique relativement élevée, une faible effusivité thermique (bon « écran thermique » car la surface qui capte échange mal la chaleur), très faible diffusivité thermique (bonne « barrière thermique » car la chaleur captée en surface se diffuse mal dans le matériau). La zircone stabilisée présente également des caractéristiques mécaniques élevées : bonne résistance mécanique en flexion, module de Young relativement modéré (réponse « élastique » plutôt que « rigide » et « fragile »). Ces bonnes propriétés mécaniques permettent également de miniaturiser les mandrins en réduisant davantage les épaisseurs.

En outre, la zircone a des coefficients de dilatation thermiques très proches des principaux matériaux métalliques utilisés dans l'aéronautique pour le bobinage (principalement les alliages de platine), ce qui minimise les perturbations de leur réponse électrique en température.

En outre, bien que la magnésie soit de nature très hydrophile, son utilisation comme stabilisant de la zircone permet de minimiser la susceptibilité de cette dernière à la chaleur humide et ne pas conduire à la transformation de phase cristalline tétragonale en phase cristalline monoclinique responsable de la destruction des zircones yttriées, même sans aucune sollicitations mécanique extérieure, par gonflement d'environ 3% volumique.

Un avantage également de la zircone magnésiée est sa couleur. La magnésie lui confère une couleur ocre d'autant plus marqué que son taux est important alors que par exemple une zircone yttriée est naturellement blanche quel que soit son taux d'oxyde d'yttrium.

Cette couleur pourra donc être utilisée comme un « témoin visuel » simple et rapide de l'état cristallographique de la céramique à l'issu du procédé de fabrication.

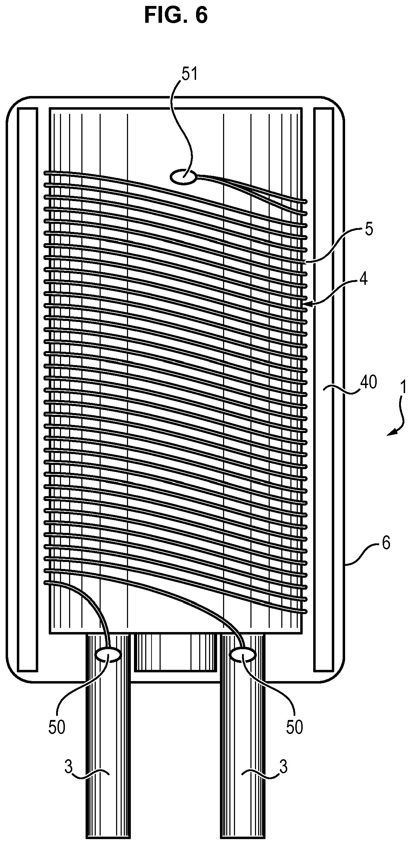

De manière alternative ou complémentaire, en relation avec la **figure 6****,** l'élément sensible 1 comprend un tube 40 en verre ou en céramique dans lequel est inséré le mandrin 4 avec le bobinage 5 et les fils de raccordement 3. Le tube 40 permet de contrôler l'épaisseur du revêtement 6 autour du mandrin 4. En particulier, le tube 40 permet de limiter l'épaisseur de ce revêtement 6. Dans ce cas, l'extrémité du mandrin est détalonnée pour laisser apparaitre les canaux longitudinaux. Le bobinage est raccordé aux fils 3 de raccordement côté sortie (là où les fils de raccordement sortent du mandrin 4) en deux points de connexion 50 et raccordé par paire en un point de connexion 51 situé sur le mandrin 4 à la valeur résistive recherchée côté opposé.

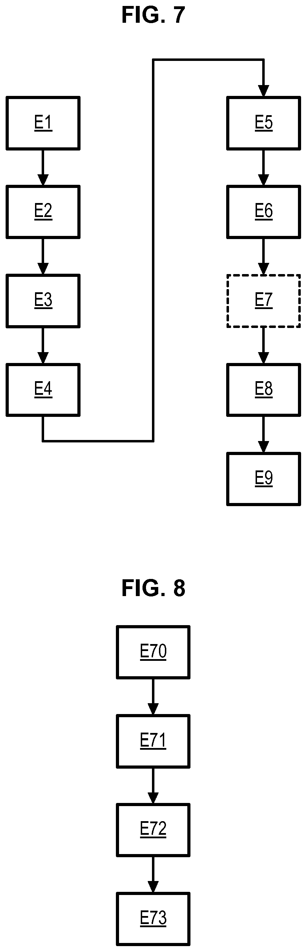

On décrit maintenant un procédé de fabrication d'un élément sensible selon un mode de réalisation de l'invention en relation avec la **figure 7****.**

On part d'un mandrin 4 allongé comprenant au moins deux canaux 7 longitudinaux.

Dans une première étape (étape E1), on bobine des fils conducteurs autour du mandrin 4 afin d'obtenir le bobinage 5 de fils conducteurs enroulés sur la surface extérieure du mandrin 4.

Dans le cas, où le bobinage 5 est en tire-bouchon, celui-ci est inséré dans les canaux longitudinaux.

Dans une seconde étape (étape E2) les fils conducteurs bobinés 5 sont collés au mandrin 4 au moyen d'un verre réfractaire (barbotine d'eau et d'oxydes appliquée au pinceau, séchée puis cuite au four). Cette étape permet de régénérer électriquement le bobinage 5 en modifiant la structure cristallographique de l'alliage métallique et permettre la manipulation des pièces.

Dans une troisième étape (étape E3), on insère les fils de raccordement à l'intérieur des canaux 7 longitudinaux. Les fils de raccordement sont avantageusement préformés avec une forme en « Z » afin d'améliorer leur maintien à l'intérieur des canaux longitudinaux (voir la figure 4).

Dans une quatrième étape (étape E4), on raccorde le bobinage (5) aux fils de raccordement 3 afin de former un circuit résistif sensible au paramètre physique à mesurer. Comme mentionné précédemment, cette étape est mise en œuvre au moyen d'une soudure ou d'une brasure 8.

Dans une cinquième étape (étape E5), on effectue un pré-collage partiel des fils de raccordement 3 au mandrin 4 au moyen d'un verre ou vitro-céramique réfractaire (barbotine d'eau et d'oxydes appliquée au pinceau, séchée puis cuite au four).

On note avantageusement que cette étape de pré-collage partiel, sert essentiellement à pouvoir manipuler l'élément sensible au cours du procédé de fabrication mais ne contribue en rien au scellement des fils 3 de raccordements au mandrin 4.

On peut avantageusement procéder dans une sixième étape, à ce niveau-là du procédé, à une calibration (étape E6) de la résistance électrique du bobinage en soudant par paire les fils bobinés à la longueur appropriée.

A l'issue des étapes ci-dessus, on obtient un élément sensible pré-assemblé 10 constitué du mandrin 4, du bobinage 5 et des fils 3 de raccordement et éventuellement du tube 40. L'élément sensible pré-assemblé 10 est l'élément sensible qui va être modifié pour obtenir l'élément sensible assemblé 10'.

On peut ici insérer, de manière facultative s'agissant de l'élément sensible de la figure 5, dans une septième étape (étape E7) le mandrin 4 dans le tube 40 (l'étape E7 est sur la figure 6 représentée en pointillés pour montrer qu'elle est facultative). Dans une huitième étape (étape E8), on met en oeuvre un cycle unique d'immersion pour procéder, au cours de ce cycle, à l'enrobage du mandrin bobiné au moyen d'une couche de verre et au scellement définitif des fils 3 de raccordement dans les canaux 7 longitudinaux, en une seule immersion, dans du verre en fusion à haute température (400°C à 1200°C), du mandrin 4 de l'élément sensible pré-assemblé 10. On précise ici que l'immersion de l'élément sensible pré-assemblé 10 n'est pas totale. En effet, c'est seulement le mandrin 4 et son bobinage (interne ou externe au mandrin 4) qui est totalement immergé, seule une infime partie des fils 3 de raccordement est immergée (de l'ordre du millimètre ou moins).

En outre, on précise ici que l'on entend par cycle d'immersion une succession de sous-étapes comprenant notamment la descente de l'élément sensible, l'immersion dans le verre en fusion en tant que telle, l'extraction du verre en fusion (sous-étapes détaillées par la suite) et sa solidification contrôlée. En outre, on précise qu'à l'issu du cycle d'immersion, le mandrin 4 est totalement enrobé.

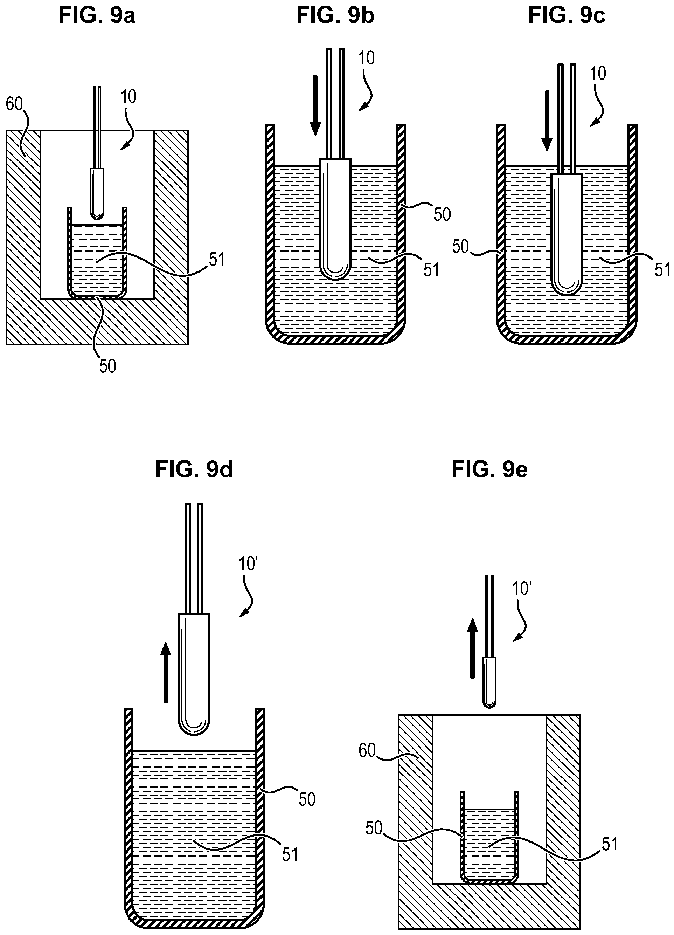

Selon l'invention le cycle d'immersion (étape E8) au cours duquel on procède à l'enrobage et au scellement définitif comprend avantageusement les sous-étapes suivantes décrites en relation avec les **figures 8** et **9a** à **9e.**

Dans une sous-étape préliminaire E70 on fixe l'élément sensible 10 en bout d'une pince (non représentée).

Dans une sous-étape E71, l'élément sensible pré-assemblé 10 est descendu rapidement (soit quelques centimètres, typiquement deux à dix centimètres) dans un four 60 jusqu'au-dessus du verre 51 en fusion à haute température (c'est-à-dire sous forme liquide et à haute température (400°C à 1200°C)) contenu dans un creuset réfractaire 50 (voir la **figure 9a****)** afin de pré-chauffer le mandrin 4 pour éviter qu'il ne refroidisse le verre 51 lors de l'immersion ultérieure ce qui le rendrait trop visqueux pour pouvoir pénétrer dans les canaux 7 longitudinaux et sceller les fils 3 de raccordement dans les canaux 7 longitudinaux. Ainsi, le mandrin 4 atteint une température qui est comprise entre 75% et 95% de la température du verre en fusion. L'élément sensible pré-assemblé 10 reste quelques dizaines de secondes au-dessus du verre en fusion de préférence, typiquement une minute.

Le verre est avantageusement réalisé à partir de deux principales familles de constituants :
- Les formateurs de réseau :
   ∘ La Silice SiO2 : peu couteuse et qui présente une bonne tenue aux chocs thermiques. En revanches, elle présente une température de fusion qui est haute (1650°C à 1730°C suivant la structure), elle présente un faible coefficient de dilatation et présente une faible tenue à la trempe.
   ∘ L'oxyde de plomb PbO : présente une température de fusion basse (888°C), fournit un verre très fluide, présente une bonne tenue à la trempe (très élastique). En revanche, il présente de faibles caractéristiques d'isolation électrique à chaud (>250°C).
   ∘ L'oxyde de zinc ZnO : de plus en plus utilisé en remplacement de l'oxyde de plomb, fournit un verre assez fluide, présente une bonne tenue à la trempe. En revanche, il présente une température de fusion haute (1975°C) et présente de faibles caractéristiques d'isolation électrique à chaud (>400°C).
   ∘ L'anhydride borique B₂O₃ : présente une température de fusion basse 450°C), présente une bonne tenue aux chocs thermiques, présente une bonne tenue à la trempe (élastique). En revanche, il peut se décomposer et vaporiser en cas de maintien en surfusion malgré une température d'ébullition élevée (1860°C), il présente un faible coefficient de dilatation et présente une faible tenue aux agressions chimiques (eau, acides, etc.).
   ∘ L'anhydride phosphorique P₂O₅ : présente une température de fusion basse (340°C). En revanche, il peut se vaporiser trop rapidement en cas de maintien en surfusion (ébullition à 360°C).
   ∘ L'alumine amorphe Al₂O₃ : présente de fortes tensions superficielles, présente une bonne résistance aux agressions chimiques (eau, acides, ...), présente de bonnes caractéristiques d'isolation électrique, présente une bonne conductivité thermique. En revanche, elle présente une très haute température de fusion (2054°C), elle est très visqueuse, et présente une faible tenue à la trempe.
   ∘ La zircone amorphe ZrO₂: présente de fortes tensions superficielles, présente une bonne résistance aux agressions chimiques (eau, acides, ...). En revanche, elle présente une très haute température de fusion (2715°C), elle est très visqueuse, elle présente de faibles caractéristiques d'isolation électrique à chaud (>500°C) et présente une faible conductivité thermique.

A noter que l'alumine amorphe et la zircone amorphe sont délicates à mettre œuvre et couteuses.
- Les modificateurs de réseau :
   ∘ Une première catégorie comprend les fondants : ils permettent de modifier le réseau, généralement en affaiblissant les liaisons atomiques ou moléculaires, souvent au détriment de la résistance aux agressions chimiques. On retrouve généralement les oxydes alcalins :
      ▪ La soude Na2O : permet d'abaisser la température de fusion et la viscosité.
      ▪ L'oxyde de potassium K2O : permet d'abaisser la température de fusion et améliore la tenue à la trempe (augmente l'élasticité des liaisons).
      ▪ L'oxyde de magnésium amorphe MgO : améliore la résistance aux agressions chimiques (eau, acides, ...) et la conductivité thermique
      ▪ L'oxyde de baryum BaO (oxyde très courant dans les émaux et glaçures céramiques) : abaisse la température de fusion malgré une température de fusion propre élevée (1920°C), améliore la tenue à la trempe (augmente fortement l'élasticité et la résistance mécanique) et la dureté superficielle. En revanche, il peut se décomposer et se vaporiser en cas de maintien en surfusion malgré une température d'ébullition élevée (2000°C).
      ▪ L'oxyde de plomb PbO : abaisse la température de fusion, augmente la fluidité, améliore la tenue à la trempe (augmente l'élasticité des liaisons) mais réduit les caractéristiques d'isolation électrique à chaud.
   ∘ Une seconde catégorie comprend les stabilisants : ils permettent de stabiliser ou consolider le réseau affaiblit par les fondants.
      ▪ L'oxyde de calcium CaO (stabilisant "bon marché" le plus employé) : améliore la résistance mécanique, améliore la résistance aux agressions chimiques (eau, acides, etc.) mais augmente les risques de recristallisation au recuit.
      ▪ L'oxyde de zinc ZnO (de plus en plus utilisé en remplacement de l'oxyde de plomb) : Il fournit un verre assez fluide avec une bonne tenue à la trempe (très élastique). En revanche, il présente une température de fusion haute (1975°C) et présente de faibles caractéristiques d'isolation électrique à chaud (>400°C).
      ▪ L'oxyde de fer Fe₂O₃ : réduit les caractéristiques d'isolation électrique à chaud. La coloration verdâtre induite peut être "lavée" par l'oxyde de manganèse MnO₂ (on l'appelle également "le savon du verrier").
      ▪ L'oxyde de plomb PbO : abaisse la température de fusion, augmente la fluidité, améliore la tenue à la trempe (augmente l'élasticité des liaisons) mais réduit les caractéristiques d'isolation électrique à chaud.

Le verre et en particulier son mode d'élaboration (l'assemblage) de ce dernier sera choisi de façon à obtenir un verre avec :
- un coefficient de dilatation thermique compatible avec le mandrin céramique, le bobinage et les fils de liaison, compromis entre le glaçage extérieur et le scellement intérieur ;
- une viscosité et une tension superficielle compatible avec le procédé ;
- une température de fusion suffisamment élevée par rapport aux températures de fonctionnement de l'élément mais suffisamment basse pour limiter le stress mécanique sur le mandrin et le bobinage ;
- une bonne tenue à la trempe pour éviter l'écaillage ou le tressaillage ;
- une aptitude au recuit à basse température ;
- une bonne résistance aux agressions chimiques (eau, acides, bases, phosphates d'ester, ...) ;
- une bonne résistance au cisaillement pour le scellement des fils de raccordement ;
- une bonne adhérence chimique sur le mandrin céramique et les fils métalliques ;
- pas d'agression chimique nuisible du mandrin céramique et des fils métalliques.
A titre d'exemple, le verre, peut être composé de
- environ 15% seulement de silice ;
- une forte teneur en oxyde de plomb de plus de 70% ;
- une forte teneur en oxyde de bore de plus de 10%.

Simultanément au pré-chauffage du mandrin 4, ce dernier subit un nettoyage par pyrolyse à cause de la chaleur régnant dans le four 60. Ainsi, le mandrin 4 est nettoyé des pollutions organiques (sébum des mains, etc.) ce qui garantit la répétabilité de l'adhérence du verre sur le mandrin 4 et le bobinage 5.

Dans une sous-étape E72, le mandrin 4 de l'élément sensible pré-assemblé 10 est partiellement immergé dans le verre 51 en fusion (voir la **figure 9b****).** On entend par, partiellement immergé, comme on peut le voir sur la **figure 9b****,** le fait que le mandrin 4 est quasiment totalement immergé (à environ 90% de sa longueur).

L'immersion partielle est effectuée lentement (quelques millimètres par seconde typiquement entre deux et dix millimètres par seconde) et on laisse le mandrin 4 ainsi partiellement immergé le temps que les canaux se remplissent (typiquement de l'ordre de la minute).

Cette immersion partielle du mandrin 4 permet de :
- finir progressivement de mettre le mandrin 4 à la même température que le verre 51 en fusion par une immersion partielle suffisamment lente ;
- ne pas emprisonner de microbulles d'air entre les spires du bobinage 3 grâce à une immersion partielle suffisamment lente ;
- remplir par capillarité les canaux 7 longitudinaux en laissant s'échapper l'air librement par la partie du mandrin 4 non immergée (le verre en fusion est trop visqueux pour laisser s'échapper l'air) ;
- assurer un accrochage optimal du verre grâce à une attaque chimique de la couche superficielle des matériaux (métalliques et céramiques) par le verre en fusion très agressif ;
- poursuivre la régénération électrique des fils bobinés 3 initiées lors de la cuisson du collage au verre réfractaire (voir étape E2).

Dans une sous-étape E73 on immerge complètement le mandrin 4 dans le verre en fusion et on laisse le mandrin 4 ainsi complètement immergé quelques minutes dans le verre en fusion 51 (voir la **figure 9c****).** Comme on l'a explicité précédemment seule une infime partie des fils de raccordements externes au mandrin 4 est immergée.

A l'issue de cette étape E73, on obtient l'élément sensible assemblé 10' (pas encore toutefois finalisé mais dont la structure est celle désirée).

Dans une sous-étape E74, après immersion complète du mandrin 4, l'élément sensible assemblé 10' est remonté lentement (voir la **figure 9d****)** afin de sortir le mandrin 4 lentement du verre en fusion 51. Par remontée lente on entend une vitesse de remontée quelques millimètres par seconde typiquement entre deux et dix millimètres par seconde.

La vitesse de remontée est importante car elle a, outre les caractéristiques du verre en fusion (viscosité, tensions superficielles, masse volumique) une incidence directe sur la régularité de l'épaisseur de la couche de verre qui enrobe le mandrin 4.

De même, le remplissage des canaux 7 longitudinaux est conditionné par les mêmes phénomènes ci-dessus avec en plus le dimensionnel des canaux (longueur, diamètre), la capillarité et la dilatation thermique du verre (retrait volumique lors de sa solidification puis de son refroidissement).

Enfin, dans une sous-étape E75, l'élément sensible assemblé 10' est remonté rapidement afin de sortir rapidement le mandrin 4 du four 60 (voir la **figure 9e****).** Par remontée rapide on entend une vitesse de remontée deux à dix fois plus rapide que la vitesse de remontée lente.

Le fait de ressortir rapidement le mandrin 4 de l'élément sensible assemblé 10' est important car compte tenu de la position verticale du mandrin 4, le verre liquide déposé sur le mandrin 4 lors de l'enrobage a naturellement tendance à s'affaisser et former :
- une goutte en partie basse (diamètre excessif) ;
- une épaisseur irrégulière entre le haut et le bas du mandrin.

En conséquence, la vitesse de retrait a son importance car il faut figer le verre le plus rapidement possible autour du mandrin 4 pour limiter ces effets.

La couche de verre obtenue pour l'enrobage complet du mandrin est très dense, tout en restant amorphe et donc transparente. Cette transparence permet entre autres un contrôle aisé de la qualité de l'enrobage (microbulles entre les fils bobinés) ainsi que de l'espacement entre les fils bobinés, garant des propriétés diélectriques entre circuits par exemple.

En outre, l'enrobage se faisant sur pièces chaudes, pyrolysées et avec du verre en fusion hautement réactif, l'adhérence entre le verre et le mandrin est fortement améliorée.

Une fois ressorti du four, dans une huitième étape (étape E9), on procède à une stabilisation du comportement électrique de l'élément sensible assemblé par détensionnement de l'enrobage lors d'un recuit du verre à température inférieure à la température de transition vitreuse du verre afin d'obtenir l'élément sensible définitif.

Cette étape de détensionnement (étape E9) est importante en ce sens, qu'à l'issue du cycle d'immersion, la couche de verre est figée rapidement sur le mandrin (4) réfractaire encore chaud. Lorsque ce dernier se refroidit à son tour, il se rétracte, ce qui comprime le verre dans son épaisseur (effet de trempe à cœur) et le tend à l'interface verre / mandrin. Le verre utilisé doit donc être suffisamment « élastique » pour supporter temporairement ces contraintes sans s'écailler.

Au cours de cette étape de détensionnement (étape E9), le recuit thermique a pour but de relâcher les contraintes résiduelles emmagasinées dans le verre pour stabiliser dans le temps le comportement électrique du bobinage platine. On note que de manière connue en soi, l'expansion thermique du platine se caractérise électriquement avec la loi de *CALLENDAR* - *VAN DUSSEN.* Ainsi, si le verre vient comprimer ou expanser le platine par dilatation thermique différentielle, la réponse électrique du platine est faussée.

En outre, les contraintes résiduelles emmagasinées dans le verre lors de son refroidissement viennent elles aussi et de la même façon fausser la réponse du bobinage du platine. Avec un comportement typique de fluide hyper-visqueux, le verre est capable de micro-déplacements moléculaires dans le temps s'il est soumis à des contraintes mécaniques (comme la mer de glace sous son propre poids). Cela veut dire que dans le temps, le verre sera capable de relâcher "tout seul" ses contraintes internes, modifiant par la même les caractéristiques électriques initiales.

En conséquence au cours de l'étape de détensionnement, le recuit est effectué à une température inférieure à la température de transition vitreuse. Plus la température sera basse, moins il y aura de risque de recristalliser le verre amorphe. Cependant, si la température est trop basse, la viscosité du verre demandera des années pour relâcher les contraintes. On note que pour l'industrie verrière, la limite de trempe est généralement caractérisée par une exposition d'environ une heure à la température normalisée dite « température inférieure de recuisson » où le verre a une viscosité de 10^{14,5} poises (il faudrait de l'ordre de 18 mois pour détensionner un verre à 10¹⁹ poises).

Dans le cadre de l'invention le recuit thermique dure plusieurs jours à une température volontairement plus basse que la température limite de recuisson normalisée (typiquement de l'ordre de 250°C à 500°C) de façon à supprimer complètement les risques de dérive électrique dans le temps, aux températures de fonctionnement auxquelles sont destinés les éléments sensibles (généralement entre - 100°C et + 400°C).

Le procédé décrit ci-dessus présente l'avantage que les étapes E5, E7, E8 et E9 nécessitent moins d'un quart d'heure de main d'oeuvre qualifiée contrairement aux techniques connues qui nécessitaient de répéter, manuellement, un certain nombre d'étapes pour sceller les fils de raccordement et enrober le mandrin.

L'élément sensible obtenu grâce au procédé de l'invention conserve en grande partie les bonnes propriétés mécaniques issues du mandrin céramique (résistance mécanique en flexion, compression et traction, rigidité en vibration, etc.) tout en ajoutant les caractéristiques du verre de la couche d'enrobage (forte densification du verre, très bonne adhérence du verre sur le mandrin céramique, étanchéité, dureté, résistance à l'usure, résistance aux agressions chimiques, diélectrique élevé, résistance d'isolement élevée, ...).

En outre, l'élément sensible ci-dessus obtenu est avantageusement utilisé dans un dispositif fortement sollicité de mesure d'un paramètre physique d'un écoulement de fluide.

## Revendications

1. Procédé de fabrication d'un élément sensible à au moins un paramètre physique d'un écoulement de fluide, comprenant un cycle unique d'immersion (E7) permettant de passer d'un élément sensible pré-assemblé (10) à un élément sensible assemblé (10), le cycle unique d'immersion (E7) comprenant une immersion dans du verre (51) en fusion, c'est-à-dire sous forme liquide et à haute température, d'un mandrin (4) de l' élément sensible pré-assemblé (10), ledit mandrin (4) comprenant au moins deux canaux (7) longitudinaux dans lesquels passent longitudinalement au moins deux fils (3) de raccordement conducteurs se raccordant à un bobinage (5) au moins bifilaire, ledit bobinage (5) étant adapté pour former un circuit résistif ou inductif de détection dudit paramètre physique, ladite immersion permettant de sceller les fils (3) de raccordement dans les canaux (7), remplir lesdits canaux et enrober l'extérieur du mandrin en une seule immersion, le mandrin étant, à l'issu dudit cycle d'immersion unique, scellé et enrobé, ledit cycle unique comprenant une première sous-étape, consistant à descendre rapidement l'élément sensible pré-assemblé dans le four jusqu'au-dessus du verre en fusion à haute température afin de pré-chauffer le mandrin ; une deuxième sous-étape, comprenant une étape d'immersion partielle, à une première vitesse lente, soit quelques millimètres par seconde, et une pause pendant laquelle le mandrin est ainsi laissé partiellement immergé ; une troisième étape, consistant à immerger le mandrin complètement dans le verre en fusion afin d'obtenir l'élément sensible assemblé ; une quatrième sous-étape, consistant à remonter l'élément sensible assemblé à une vitesse lente, soit quelques millimètres par seconde ; une cinquième sous-étape, consistant à remonter l'élément sensible assemblé à une vitesse rapide, soit deux à dix fois plus rapide que la vitesse de remontée lente, afin de sortir rapidement et entièrement le mandrin du four.

2. Procédé selon la revendication 1, dans lequel le bobinage bifilaire est enroulé sur la surface extérieure du mandrin (4), l'immersion permettant d'enrober l'extérieur du mandrin (4) ainsi bobiné.

3. Procédé selon la revendication 1, dans lequel le bobinage est enroulé en « tire-bouchon » à l'intérieur des canaux (7) longitudinaux, l'immersion permettant de maintenir les fils de raccordement au bobinage et de contrôler l'espace entre les spires du bobinage.

4. Procédé selon l'une des revendications précédentes, dans lequel l'élément sensible pré-assemblé comprend un tube (40) entourant le mandrin (4), ledit tube (40) étant de préférence en verre ou en céramique, ledit tube permettant de maitriser l'épaisseur minimum de l'enrobage au cours de l'immersion.

5. Procédé selon l'une des revendications précédentes, dans lequel le cycle unique d'immersion comprend une étape (E71) de préchauffage et de nettoyage de l'élément sensible pré-assemblé (10) consistant à positionner ledit élément sensible pré-assemblé (10) à proximité du verre en fusion sans immerger ledit élément sensible pré-assemblé (10) dans le verre en fusion de façon à ce que le verre en fusion chauffe l'élément sensible pré-assemblé (10) pour qu'il atteigne une température proche dudit verre en fusion, c'est-à-dire comprise entre 75% et 95% de la température du verre en fusion.

6. Procédé selon l'une des revendications précédentes, comprenant à l'issue de l'étape consistant en un cycle unique d'immersion (E7), une étape (E8) de stabilisation du comportement électrique de l'élément sensible assemblé (10') par détensionnement au cours d'un recuit du verre à température modérée et contrôlée afin d'obtenir l'élément sensible définitif.

7. Procédé selon l'une des revendications précédentes, dans lequel les fils de raccordement et le bobinage sont en alliage de platine et le mandrin est en zircone partiellement ou totalement stabilisée, par exemple par ajout d'oxyde d'yttrium ou d'oxyde de magnésium.

8. Procédé selon l'une des revendications précédentes, dans lequel le verre en fusion présente une température comprise entre 400°C et 1200°C, typiquement 950°C.

## Patentansprüche

1. Verfahren zur Herstellung eines Elements, das für mindestens einen physikalischen Parameter eines Fluidstroms, umfassend einen einzigen Eintauchzyklus (E7), der ermöglicht, ein vorassembliertes empfindliches Element (10) in ein assembliertes empfindliches Element (10') umzuwandeln, wobei der einzige Eintauchzyklus (E7) ein Eintauchen eines Dorns (4) des vorassemblierten empfindlichen Elements (10) in geschmolzenes Glas (51), d. h. in flüssiger Form und bei hoher Temperatur, umfasst, wobei der Dorn (4) mindestens zwei längliche Kanäle (7) umfasst, durch die mindestens zwei leitende Verbindungsadern (3) verlaufen, die mit einer mindestens zweiadrigen Wicklung (5) verbunden sind, wobei die Wicklung (5) zum Bilden einer resistiven oder induktiven Schaltung zur Erfassung des physikalischen Parameters eingerichtet ist, wobei das Eintauchen ermöglicht, die Verbindungsadern (3) in den Kanälen (7) zu versiegeln, die Kanäle zu füllen und das Äußere des Dorns in einem einzigen Eintauchen zu umhüllen, wobei der Dorn am Ende des einzigen Eintauchzyklus versiegelt und umhüllt ist, wobei der einzige Zyklus einen ersten Unterschritt, bestehend in einem schnellen Ablassen des vorassemblierten empfindlichen Elements in den Ofen bis über das geschmolzene Glas bei hoher Temperatur, um den Dorn vorzuerhitzen; einen zweiten Unterschritt, umfassend einen Schritt eines partiellen Eintauchens mit einer ersten langsamen Geschwindigkeit, nämliche einige Millimeter pro Sekunde, und eine Pause, während der der Dorn so partiell eingetaucht wird; einen dritten Schritt, bestehend in einem vollständigen Eintauchen des Dorns in das geschmolzene Glas, um das assemblierte empfindliche Element zu erhalten; einen vierten Unterschritt, bestehend in einem Hochziehen des assemblierten empfindlichen Elements mit einer langsamen Geschwindigkeit, nämlich einige Millimeter pro Sekunde; einem fünften Unterschritt, bestehend in einem Hochziehen des assemblierten empfindlichen Elements mit einer schnellen Geschwindigkeit, nämlich um das Zweibis Zehnfache schneller als die langsame Hochziehgeschwindigkeit, um den Dorn schnell und völlig aus dem Ofen herauszuziehen, umfasst.

2. Verfahren nach Anspruch 1, wobei die zweiadrige Wicklung auf die Außenfläche des Dorns (4) gewickelt wird, wobei das Eintauchen ermöglicht, das Äußere des so gewickelten Dorns (4) zu umhüllen.

3. Verfahren nach Anspruch 1, wobei die Wicklung als "Korkenzieher" im Inneren der länglichen Kanäle (7) gewickelt wird, wobei das Eintauchen ermöglicht, die Verbindungsadern auf der Wicklung zu halten und den Raum zwischen den Windungen der Wicklung zu kontrollieren.

4. Verfahren nach einem der vorhergehenden Ansprüche, wobei das vorassemblierte empfindliche Element eine Röhre (40) umfasst, die den Dorn (4) umschließt, wobei die Röhre (40) vorzugsweise aus Glas oder aus Keramik ist, wobei die Röhre ermöglicht, die Mindestdicke der Umhüllung im Laufe des Eintauchens zu steuern.

5. Verfahren nach einem der vorhergehenden Ansprüche, wobei der einzige Eintauchzyklus einen Schritt (E71) eines Vorerhitzens und eines Reinigens des vorassemblierten empfindlichen Elements (10) umfasst, bestehend in einem Positionieren des vorassemblierten empfindlichen Elements (10) in der Nähe des geschmolzenen Glases, ohne das vorassemblierte empfindliche Element (10) in das geschmolzene Glas einzutauchen, so dass das geschmolzene Glas das vorassemblierte empfindliche Element (10) erhitzt wird, damit es eine Temperatur nahe der des geschmolzenen Glases erreicht, d. h. zwischen 75 % und 95 % der Temperatur des geschmolzenen Glases liegt.

6. Verfahren nach einem der vorhergehenden Ansprüche, umfassend am Ende des Schritts, bestehend in einem einzigen Eintauchzyklus (E7) einen Schritt (E8) eines Stabilisierens des elektrischen Verhaltens des assemblierten empfindlichen Elements (10') durch Spannungsarmglühen im Laufe eines Glühens des Glases bei einer gemäßigten und kontrollierten Temperatur, um das endgültige empfindliche Element zu erhalten.

7. Verfahren nach einem der vorhergehenden Ansprüche, wobei die Verbindungsadern und die Wicklung aus einer Platinlegierung sind und der Dorn aus Zirconiumdioxid ist, das partiell oder voll stabilisiert ist, beispielsweise durch Zugabe von Yttriumoxid oder Magnesiumoxid.

8. Verfahren nach einem der vorhergehenden Ansprüche, wobei das geschmolzene Glas eine Temperatur aufweist, die zwischen 400 °C und 1200 °C liegt, in der Regel 950 °C ist.

## Claims

1. A process for manufacturing an element sensitive to at least one physical parameter of a fluid flow, comprising a single immersion cycle (E7) making it possible for a pre-assembled sensitive element (10) to become an assembled sensitive element (10'), the single immersion cycle (E7) comprising immersion of a core (4) of the pre-assembled sensitive element (10) in molten glass (51), said molten glass being glass in liquid form and at high temperature, said core (4) comprising at least two longitudinal channels (7) through which pass longitudinally at least two conductive connecting wires (3) connecting to an at least bifilar winding (5) said winding (5) being suitable for forming a resistive or inductive circuit for detecting said physical parameter, said immersion making it possible to seal the connecting wires (3) in the channels (7), fill said channels and coat the outside of the core in a single immersion, the core being, at the end of said single immersion cycle, sealed and coated, said single cycle comprising a first sub-step, consisting of rapidly lowering the pre-assembled sensitive element in the furnace to above the high-temperature molten glass in order to pre-heat the core; a second sub-step, comprising a step of partial immersion, at a first slow speed, i.e., a few millimeters per second, and a pause during which the core is thus left partially immersed; a third step, consisting in immersing the core completely in the molten glass in order to obtain the assembled sensitive element; a fourth sub-step, consisting in raising the assembled sensitive element at a slow speed, i.e., a few millimeters per second; a fifth sub-step, consisting in raising the assembled sensitive element at a fast speed, i.e., two to ten times faster than the slow raising speed, in order to quickly and completely remove the core from the furnace.

2. The process as claimed in claim 1, wherein the bifilar winding is wound on the outer surface of the core (4), the immersion making it possible to coat the outside of the core (4) thus wound.

3. The process as claimed in claim 1, wherein the winding is corkscrew wound inside the longitudinal channels (7), the immersion making it possible to hold the connecting wires in place on the winding and control the space between the turns of the winding.

4. The process as claimed on one of the preceding claims, wherein the pre-assembled sensitive element comprises a tube (40) surrounding the core (4), said tube (40) preferably being made of glass or ceramic, said tube making it possible to control the minimum thickness of the coating during immersion.

5. The process as claimed in one of the preceding claims, wherein the single immersion cycle comprises a step (E71) of pre-heating and cleaning of the pre-assembled sensitive element (10) consisting in positioning said pre-assembled sensitive element (10) close to the molten glass without immersing said pre-assembled sensitive element (10) in the molten glass in such a way that the molten glass heats the pre-assembled sensitive element (10) so that it reaches a temperature close to that of said molten glass, i.e., between 75% and 95% of the temperature of the molten glass.

6. The process as claimed in one of the preceding claims, comprising, following the step consisting in a single immersion cycle (E7), a step (E8) of stabilization of the electrical behavior of the assembled sensitive element (10') by stress-relieving by annealing the glass at a moderate and controlled temperature in order to obtain the final sensitive element.

7. The process as claimed on one of the preceding claims, wherein the connecting wires and the winding are made of platinum alloy and the core is made of partially or totally stabilized zirconium, for example by adding yttrium oxide or magnesium oxide.

8. The process as claimed on one of the preceding claims, wherein the molten glass has a temperature between 400°C and 1200°C, typically 950°C.
